# FASCICULE DE BREVET EUROPEEN

(11) **EP 4 261 135 B1**
(45) Date de publication et mention de la délivrance du brevet: **31.12.2025**
(21) Numéro de dépôt: 23161241.7
(22) Date de dépôt: 10.03.2023
(51) Int. Cl.: B64D 31/00, B64D 43/00, G01D 7/02

(54) **PROCEDE ET SYSTEME D'AIDE AU PILOTAGE D'UN AERONEF, AERONEF EQUIPE D'UN TEL SYSTEME**
VERFAHREN UND SYSTEM ZUR UNTERSTÜTZUNG DER STEUERUNG EINES FLUGZEUGS, FLUGZEUG MIT SOLCH EINEM SYSTEM
METHOD AND SYSTEM FOR ASSISTING THE PILOTING OF AN AIRCRAFT, AIRCRAFT EQUIPPED WITH SUCH A SYSTEM

(30) Priorité: 15.04.2022 FR 2203512
(43) Date de publication de la demande: 18.10.2023
(73) Titulaire: AIRBUS HELICOPTERS, 13725 Marignane Cedex (FR)
(72) Inventeur: CIABRINI, Andrea, 20137 PORTO-VECCHIO (FR); GORGES, Christian, 13012 MARSEILLE (FR); SKORLIC, Christophe, 13300 SALON DE PROVENCE (FR); VINCENT, Eric, 13090 AIX EN PROVENCE (FR); CHIARIGLIONE, Emmanuel, 13510 EGUILLES (FR); DUMUR, Guillaume, 13300 SALON DE PROVENCE (FR); ABBINK, Philippe, 13090 AIX EN PROVENCE (FR)
(74) Mandataire: GPI Brevets

(56) Documents cités:
- CN-A- 105 416 601
- FR-A1- 2 772 718
- FR-A1- 2 888 638
- US-A1- 2001 044 679
- US-B1- 10 173 787

## Description

De façon générale, pour piloter un giravion il est nécessaire de surveiller de nombreux instruments agencés sur un tableau de bord. Ces instruments permettent notamment d'informer le pilote sur les conditions extérieures du vol et sur certains paramètres de fonctionnement du giravion. De tels paramètres de fonctionnement peuvent notamment concerner un ensemble moteur et/ou une boîte de transmission de puissance principale désignée par la suite par commodité "boîte BTP" et se rapporter à la température et/ou la pression de fluides circulant dans ces organes.

Par ailleurs, pour des raisons physiques il existe de nombreuses limitations, notamment thermiques, que le pilote doit prendre en compte à chaque instant du vol.

En outre, certains giravions sont équipés notamment d'un ou plusieurs turbomoteurs à turbine libre. La puissance est alors prélevée sur un étage dit « basse pression » de la turbine, lequel étage est mécaniquement indépendant d'un ensemble compresseur et d'un étage dit « haute pression » de la turbine. Un turbomoteur tournant entre 30000 et 50000 tours par minute, la boîte de transmission de puissance principale permet de réduire la vitesse de rotation en sortie de l'ensemble moteur pour entraîner en rotation le (ou des) rotor(s) du giravion à une vitesse de rotation NR de l'ordre de 300 à 400 tours par minute par exemple.

En outre le motoriste établit, par calculs ou par essais, les courbes de la puissance disponible d'un turbomoteur en fonction notamment de l'altitude et de la température, et cela pour chaque régime de fonctionnement autorisé.

De telles courbes définissent alors des limitations qui peuvent être notamment surveillées par l'intermédiaire par exemple de plusieurs paramètres de fonctionnement du giravion, à savoir la vitesse de rotation d'un moteur, le couple (TQ) lié au fonctionnement du moteur de la boîte BTP et la température des gaz du moteur (T4).

Les valeurs de ces paramètres peuvent être affichées sur des cadrans différents.

Le document FR2749545 décrit un indicateur de pilotage qui identifie, parmi des paramètres de surveillance du turbomoteur, celui qui est le plus proche de sa limite. Les informations relatives aux limitations à respecter sont ainsi regroupées sur un affichage unique, en permettant, d'une part, d'effectuer une synthèse et de présenter uniquement le résultat de cette synthèse afin de simplifier la tâche du pilote et, d'autre part, de gagner de la place sur la planche de bord. On obtient ainsi un « paramètre limitant », parmi lesdits paramètres de surveillance du turbomoteur, dont la valeur courante est la plus proche de la valeur limite pour ledit paramètre. Pour cette raison, on désignera également ci-après un tel indicateur par l'expression « instrument de première limitation », en abrégé « IPL ».

En outre, des variantes de cet IPL permettent d'afficher la valeur du paramètre limitant en équivalent de puissance, c'est-à-dire en marge de puissance telle que +10% de la PMD par exemple, ou encore en marge de pas, le pas indiquant la position des pales du rotor du giravion par rapport au vent incident.

En outre, il est alors connu et tel que décrit dans les documents FR 2 756 256 et FR 2 973 340 ou encore dans les documents US 2013/054053 et CN 105 416 601 d'utiliser ces différents paramètres pour mettre en oeuvre des indicateurs de marge de puissance, une telle marge pouvant être exprimée en valeur de pas collectif d'un rotor principal, permettant au(x) pilote(s) de disposer d'une indication synthétique des marges de puissance disponibles, remplaçant plusieurs indicateurs classiques en général dispersés sur le tableau de bord. Le document CN105 416 601 A décrit un écran d'hélicoptère affichant des paramètres (température, vitesse de rotation, couple moteur) de chacun des deux moteurs de l'hélicoptère à l'aide d'un écran. Chaque paramètre est représenté graphiquement par deux pointeurs sous un arc de cercle, chacun des pointeurs étant associé à un des deux moteurs. Selon des zones de valeurs prédéfinis du paramètre moteur, la couleur du pointeur change. L'écran affiche aussi à gauche sous l'arc de cercle correspondant au paramètre la valeur numérique du paramètre du moteur de gauche et à droite sous cet arc de cercle celle du moteur de droite.

En outre sur certains hélicoptères, les valeurs courantes des différents paramètres de fonctionnement du moteur et de la boîte BTP peuvent être affichés en permanence sur un dispositif d'affichage dédié, il est alors possible pour un pilote de voir quelles sont les valeurs de ces différents paramètres et éventuellement si l'une de ces valeurs se rapproche d'une limite.

Cependant, lorsque l'aéronef ne comporte pas ce dispositif d'affichage dédié, il n'est plus possible pour le pilote de connaître quel est le paramètre qui approche de sa limite. Un dépassement de limite pourra être indiqué qu'une fois cette limite atteinte.

Par ailleurs, l'affichage en permanence des valeurs courantes des paramètres de fonctionnement du moteur et/ou de la boîte BTP sur une page dédiée d'un deuxième écran peut être pénalisant car ce deuxième écran ne peut plus être utilisé pour l'affichage d'informations nécessaire à la mission.

En outre, il est également connu le document FR 2 950 324 qui décrit un procédé et un dispositif d'aide au pilotage d'un aéronef en cas de pannes d'un indicateur de première limitation.

Un tel document divulgue alors le fait de maintenir chaque paramètre de surveillance (Ng, T4, Tq) en dessous d'un seuil prédéterminé lorsque l'indicateur de première limitation n'est plus à même d'afficher l'information correspondant à l'échelle IPL.

Le document FR 2 871 520 présente quant à lui un indicateur de pilotage permettant de prédire l'évolution des paramètres de surveillance d'un turbomoteur.

Le document FR 3 051 772 décrit par ailleurs un procédé et un dispositif d'aide au pilotage d'un aéronef. **Il** propose quant à lui d'autoriser un dépassement de limitation par la régulation moteur en cas de montée du pas collectif.

Le document FR 2 772 718 décrit un instrument de première limitation identifiant, parmi des paramètres de surveillance du turbomoteur, celui qui est le plus proche de sa limite. Les informations relatives aux limitations à respecter sont ainsi regroupées sur un affichage unique. **Il** décrit également un procédé d'aide au pilotage d'un aéronef comportant, lors d'une phase de vol de l'aéronef, au moins deux étapes de mesure d'au moins deux valeurs courantes respectivement d'au moins deux paramètres de fonctionnement de l'aéronef.

Le document FR 2 888 638 concerne quant à lui un indicateur de pilotage d'un aéronef du type comportant des sources d'informations, des moyens de traitement d'informations reçues des sources d'informations et des moyens d'affichage susceptibles de présenter sur au moins un écran de visualisation des données issues des moyens de traitement.

En outre, les sources d'information déterminent les valeurs de paramètres relatifs à une hélice et à une turbine d'un turbopropulseur, ainsi que les valeurs de paramètres relatifs à l'aéronef; les moyens de traitement calculent, à partir de ces valeurs, un paramètre de puissance qui tient compte du rapport entre la puissance courante du turbopropulseur et la puissance maximale obtenue sans prélèvement d'air au niveau de la mer en atmosphère standard; et les moyens d'affichage présentent, sur l'écran de visualisation, au moins un signe caractéristique illustrant le paramètre de puissance.

Des moyens d'affichage (5) présentent sur l'écran de visualisation (7) un cadran (12) qui est gradué en pourcentage (de 0% à 100%) et dont le maximum ("10", c'est-à-dire 100%) représente la puissance maximale PWRmax.

Le document US 10 173 787 décrit quant à lui un autre instrument de première limitation pour un giravion bimoteur (10) ayant un rotor (12).

Un tel instrument de première limitation comprend ainsi un affichage (40) conçu pour redéfinir dynamiquement les informations communiquées à un pilote.

Le giravion bimoteur (10) comprend une pluralité de capteurs pour mesurer des paramètres tels que la vitesse de la turbine de puissance (Np), la vitesse du rotor principal (Nr), le couple moteur (Qe), la température mesurée de la turbine à gaz (MGT), la vitesse de la turbine à gaz (Ng) et le couple de mât (Qm).

Une jauge de puissance (42) est construite et agencée pour fournir une indication combinée de MGT, Ng, Qe et Qm de telle sorte que la relation entre ces paramètres et plusieurs limites de fonctionnement soit connue via une seule aiguille indicatrice.

En outre, un indicateur de graphique à barres (50) peut afficher la valeur de la vitesse de rotation du rotor principal (Nr) (72) et cette valeur (72) peut être colorée en fonction des conditions de vol.

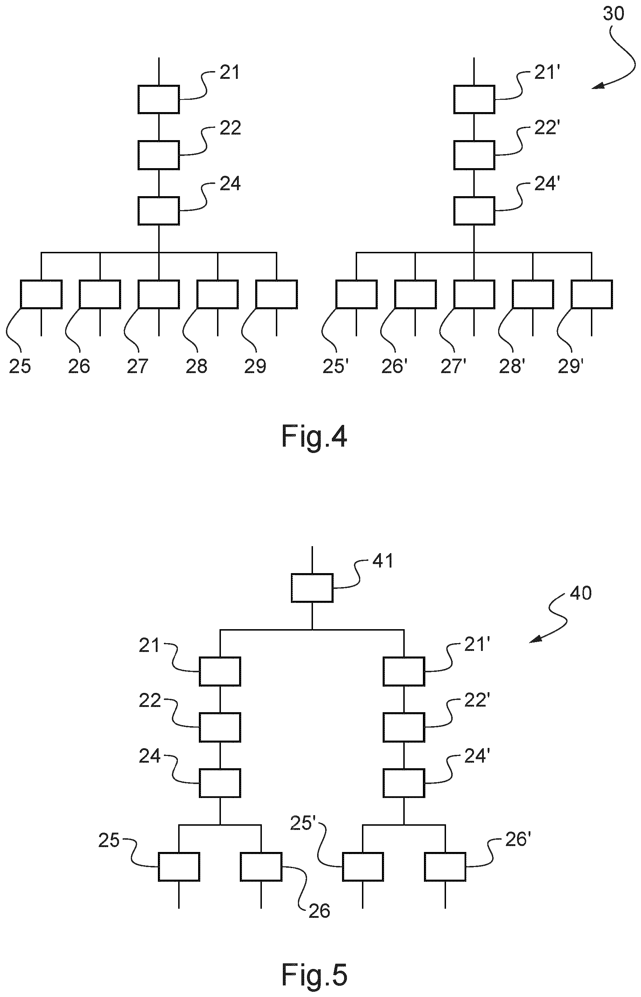

Par ailleurs, cette valeur de la vitesse du rotor principal est définie comme étant un pourcentage d'une valeur de référence comprise entre par exemple 97%(tel que représenté à la figure 4D) et 103% (tel que représenté à la figure 4A).

Le document US 2001/044679 décrit un autre instrument de première limitation mais sans afficher de donnée numérique représentative d'une valeur courante d'un paramètre de fonctionnement.

La présente invention a alors pour objet de proposer un procédé et un dispositif d'aide au pilotage alternatif d'un aéronef. Ce procédé et ce dispositif d'aide au pilotage permettent en effet de fournir une solution visant à limiter la charge de travail d'un pilote et à faciliter l'identification par le pilote de l'origine d'un risque de dépassement d'une limite de l'un des paramètres de fonctionnement du moteur et de la boîte BTP.

La sécurité du vol est alors améliorée car le pilote peut anticiper ses manœuvres de pilotage ou même effectuer une action de pilotage permettant d'éviter le dépassement de cette limite.

L'invention concerne donc un procédé d'aide au pilotage d'un aéronef, le procédé comportant lors d'une phase de vol de l'aéronef au moins deux étapes de mesure d'au moins deux valeurs courantes respectivement d'au moins deux paramètres de fonctionnement de l'aéronef.

En outre, l'expression « au moins deux étapes de mesure d'au moins deux valeurs courantes respectivement d'au moins deux paramètres de fonctionnement de l'aéronef » signifie que chaque étape de mesure permet de mesurer une valeur courante d'un paramètre de fonctionnement de l'aéronef.

Selon l'invention, un tel procédé est remarquable en ce qu'il comporte, pour chacun des au moins deux paramètres de fonctionnement, les étapes suivantes :
- génération d'une donnée numérique représentative d'une valeur courante de ce paramètre de fonctionnement,
- identification d'un intervalle courant dans lequel un indice est compris, cet indice étant choisi parmi le groupe comportant la valeur courante, une vitesse de variation par rapport au temps de la valeur courante et une valeur courante corrigée en fonction de la vitesse de variation par rapport au temps de la valeur courante, l'intervalle courant étant identifié parmi au moins deux intervalles d'indices, chaque intervalle desdits au moins deux intervalles d'indices étant associé à une configuration d'affichage spécifique de la donnée numérique, deux configurations distinctes associés à deux intervalles différents étant différentes l'une de l'autre, lesdites configurations distinctes étant identiques respectivement pour chacun desdits au moins deux paramètres de fonctionnement, chaque configuration d'affichage spécifique correspondant à une combinaison d'au moins une couleur de ladite donnée numérique, une couleur de fond d'une zone d'affichage de ladite donnée numérique et une couleur d'un contour de ladite zone d'affichage et,
- affichage de la donnée numérique dans au moins une page de symbologies selon ladite configuration d'affichage spécifique correspondant à l'intervalle courant.

En outre, l'indice correspondant à la vitesse de variation par rapport au temps de la valeur courante peut être déterminé à partir de plusieurs valeurs courantes d'un paramètre mesurées pendant une durée prédéterminée.

Par ailleurs, on entend par l'expression « lesdites configurations distinctes étant identiques respectivement pour chacun desdits au moins deux paramètres de fonctionnement » signifie que l'affichage de chaque donnée numérique est réalisé de manière identique selon chacune des configurations d'affichage. Ainsi, les configurations d'affichages des valeurs numériques correspondant à un paramètre de fonctionnement sont identiques aux configurations d'affichages des valeurs numériques correspondant à un autre paramètre de fonctionnement.

Par conséquent, en fonction de la configuration de l'affichage de chaque donnée numérique, le pilote peut identifier rapidement dans quel intervalle se trouve l'indice du paramètre de fonctionnement concerné. En choisissant de manière adéquate les intervalles, le pilote peut déterminer si le paramètre de fonctionnement de l'aéronef s'approche d'une limite avant le dépassement de cette limite. Une telle limite peut en effet être incluse dans un troisième intervalle, distinct d'un premier intervalle et d'un deuxième intervalle, la limite étant par exemple une borne de ce troisième intervalle. Ces premier, deuxième et troisième intervalles d'indices appartiennent ainsi aux au moins deux intervalles.

Les paramètres de fonctionnement de l'aéronef peuvent comme déjà évoqué être des paramètres liés au fonctionnement du moteur et de la boîte BTP. Le procédé est applicable pour un ou plusieurs des paramètres de fonctionnement suivants : une vitesse de rotation d'un générateur de gaz (N1) d'un moteur de l'aéronef, un premier couple (TQ1) lié au fonctionnement du moteur, un second couple (TQ2) lié au fonctionnement d'une boîte principale de transmission de puissance, une température (T4) des gaz du moteur et une vitesse de rotation NR d'un rotor équipant l'aéronef.

La charge de travail du pilote est alors réduite car la seule visualisation de la configuration d'affichage courante permet au pilote de savoir dans quel intervalle de valeurs se trouve la donnée numérique.

Ainsi, tant que les données numériques sont affichées dans une première configuration d'affichage distincte d'une deuxième configuration d'affichage, le pilote sait que l'intervalle courant dans lequel un indice est compris ne présente pas de danger de dépassement d'une limite. Le pilote n'a alors aucun besoin de lire les données numériques affichées.

De plus, le fait d'utiliser les mêmes configurations d'affichage pour chacun des différents paramètres de fonctionnement permet également de réduire la charge de travail du pilote qui n'a pas à regarder la valeur affichée ni à la comparer avec une limite éventuelle pour évaluer une marge entre la valeur courante et une limite associée.

Une zone d'affichage de la même page de symbologies affichée pour chaque donnée numérique peut correspondre par exemple à une forme rectangulaire à l'intérieur de laquelle cette donnée numérique est inscrite. De manière avantageuse, la forme et la taille de chacune des zones d'affichage peuvent être les mêmes pour chaque donnée numérique.

Par ailleurs, un premier intervalle d'indices peut ainsi correspondre à un intervalle sans risque de dépassement d'une limite pour chacun des paramètres.

Un deuxième intervalle d'indices consécutif au premier intervalle peut quant à lui correspondre à un intervalle plus proche d'une limite pour chacun des paramètres. Le risque de dépassement d'une limite est alors supérieur et un changement de la configuration d'affichage de la donnée numérique permet d'informer le pilote de ce rapprochement de la limite.

Eventuellement, un troisième intervalle d'indices peut correspondre quant à lui à un autre intervalle consécutif au deuxième intervalle. Ce troisième intervalle peut dés lors être plus proche d'une limite pour l'un des paramètres lorsque les au moins deux intervalles sont au nombre de quatre ou plus.

Alternativement, les au moins deux intervalles sont au nombre de trois, un troisième intervalle peut correspondre à un intervalle incluant une limite pour tous les paramètres.

En outre, pour une même configuration, l'intervalle associé est spécifique et différent pour chaque paramètre.

Le procédé d'aide au pilotage peut de plus comporter une ou plusieurs des caractéristiques qui suivent.

Avantageusement, les au moins deux intervalles d'indices peuvent comporter un premier intervalle d'indices, un deuxième intervalle d'indices, un troisième intervalle d'indices, un quatrième intervalle d'indices, les premier, deuxième, troisième et quatrième intervalles étant disjoints les uns des autres.

Pour chaque paramètre, le premier intervalle d'indices peut alors correspondre au niveau de risque le plus éloigné d'une limite pour le paramètre considéré. Les deuxième et troisième intervalles d'indices peuvent alors correspondre à des niveaux de risque croissant se rapprochant de cette limite et le quatrième intervalle d'indices peut quant à lui correspondre au dépassement de cette limite.

Selon l'invention revendiquée, chaque configuration d'affichage spécifique correspond à une combinaison d'au moins une couleur de la donnée numérique, une couleur de fond d'une zone d'affichage de la donnée numérique et une couleur d'un contour de la zone d'affichage.

Selon un exemple de réalisation particulier des combinaisons possibles pour la couleur de la donnée numérique, la couleur de fond de la zone d'affichage et la couleur du contour de la zone d'affichage :
- une première configuration d'affichage prédéterminée peut présenter une couleur blanche pour la donnée numérique, une couleur noire pour le fond de la zone d'affichage et une couleur noire pour le contour de la zone d'affichage,
- une deuxième configuration d'affichage prédéterminée peut présenter une couleur blanche pour la donnée numérique, une couleur noire pour le fond de la zone d'affichage et une couleur blanche pour le contour de la zone d'affichage,

- une troisième configuration d'affichage prédéterminée peut présenter une couleur noire pour la donnée numérique, une couleur ambre pour le fond de la zone d'affichage et une couleur ambre pour le contour de la zone d'affichage, et
- une quatrième configuration d'affichage prédéterminée peut présenter une couleur noire pour la donnée numérique, une couleur ambre pour le fond de la zone d'affichage et une couleur blanche pour le contour de la zone d'affichage.

Eventuellement en plus de ces quatre configurations d'affichage prédéterminées, une cinquième configuration d'affichage prédéterminée peut présenter une couleur blanche pour la donnée numérique, une couleur rouge pour le fond de la zone d'affichage et une couleur rouge pour le contour de la zone d'affichage.

Par ailleurs, l'affichage de chaque donnée numérique peut s'effectuer en colonne dans ladite au moins une page de symbologies, au moins une donnée numérique étant agencée au dessus d'une autre donnée numérique.

Par suite, les zones d'affichages correspondant à chacune des données numériques sont alors superposées et peuvent correspondre à des cellules rectangulaires formant une colonne. Par suite, les contours de deux zones d'affichage juxtaposées peuvent être confondus l'un avec l'autre ou peuvent venir contact l'un avec l'autre.

Selon un premier exemple de réalisation de l'invention, ladite au moins une page de symbologies peut comporter une unique page choisie parmi un groupe comportant une page « dite FND » liée à la navigation en vol de l'aéronef et une page « dite VMD » liée au fonctionnement de l'aéronef.

Autrement dit, chaque donnée numérique peut être affichée dans une seule page de symbologies sur un afficheur tel un écran ou une visière de casque. De préférence, la page de symbologies peut alors être la page FND correspondant à l'acronyme de l'expression anglaise « Flight Navigation Display ». Une telle page FND peut notamment comporter une information de cap, d'altitude, de route à suivre etc. fournissant toute information utile pour la navigation de l'aéronef.

De manière alternative, la page de symbologies peut être la page VMD correspondant à l'acronyme de l'expression anglaise « Vehicle Management Display ». Une telle page VMD peut notamment comporter une information de pression, de température, de niveau de carburant, de charge électrique etc ....fournissant toute information utile pour le bon fonctionnement de l'aéronef.

Selon un second exemple de réalisation de l'invention, ladite au moins une page de symbologies peut comporter une page « dite FND » liée à la navigation en vol de l'aéronef et une page « dite VMD » liée au fonctionnement de l'aéronef.

Autrement dit, chaque donnée numérique peut être affichée dans plusieurs pages de symbologies telles que la page FND et la page VMD. Ces pages peuvent alors être affichées simultanément ou alternativement l'une après l'autre sur un ou plusieurs afficheurs.

En outre selon un autre exemple, l'aéronef pouvant comporter au moins deux moteurs, le procédé peut comporter une identification d'un mode de fonctionnement de l'aéronef parmi au moins un mode dit par commodité« AEO » dans lequel tous lesdits au moins deux moteurs sont opérationnels, un mode dit par commodité « OEI » dans lequel l'un desdits au moins deux moteurs est en panne et un mode dit par commodité « OEI training » dans lequel une panne de l'un desdits au moins deux moteurs est simulée à des fins d'entraînement au pilotage.

En d'autres termes, le procédé peut comporter une étape d'identification d'un mode de fonctionnement de l'aéronef. Cette identification d'un mode de fonctionnement peut être mise en œuvre de manière à modifier l'affichage de chacune des données numériques. Une telle étape d'identification d'un mode de fonctionnement de l'aéronef peut être mise en œuvre au démarrage de l'aéronef ou bien en vol par exemple à la demande du pilote ou bien encore automatiquement.

Avantageusement, en fonction de l'identification du mode de fonctionnement de l'aéronef, l'un au moins des au moins deux intervalles d'indices peut être variable.

Autrement dit, une borne ou les bornes d'un des intervalles d'indices peuvent changer en fonction du mode de fonctionnement de l'aéronef pour au moins un des paramètres.

Ainsi dans le mode AEO, les bornes respectives des intervalles d'indices peuvent être inférieures ou supérieures aux bornes respectives des intervalles d'indices correspondant au mode OEI ou au mode OEI training.

En pratique, dans le mode AEO, au moins un intervalle parmi les au moins deux intervalles d'indices peut être défini par un premier couple de bornes, dans le mode OEl, cet intervalle d'indices peut être défini par un deuxième couple de bornes, et dans le mode OEI training, cet intervalle d'indices peut être défini par un troisième couple de bornes, l'un au moins des premier, deuxième et troisième couples de bornes étant distinct d'au moins un autre couple de bornes parmi lesdits première, deuxième et troisième couples de bornes.

Par exemple, l'une des bornes inférieure ou supérieure du premier couple de bornes peut être inférieure ou supérieure à la borne inférieure ou supérieure du deuxième couple de bornes. Cette borne inférieure ou supérieure du deuxième couple de bornes peut quant à elle être égale à la borne inférieure ou supérieure du troisième couple de bornes.

Selon un autre exemple, l'une des bornes inférieure ou supérieure du premier couple de bornes peut être par exemple égale à la borne inférieure ou supérieure du deuxième couple de bornes. Cette borne inférieure ou supérieure du deuxième couple de bornes peut quant à elle être inférieure ou supérieure à la borne inférieure ou supérieure du troisième couple de bornes.

Selon encore un autre exemple, l'une des bornes inférieure ou supérieure du premier couple de bornes peut être par exemple distincte de la borne inférieure ou supérieure du deuxième couple de bornes elle-même distincte de la borne inférieure ou supérieure du troisième couple de bornes. Cette borne inférieure ou supérieure du premier couple de bornes est également distincte de la borne inférieure ou supérieure du troisième couple de bornes.

Selon un mode réalisation particulier, au moins un intervalle parmi les au moins deux intervalles d'indices peut être prédéterminé pour au moins un desdits au moins deux paramètres.

Autrement dit, le ou les intervalles d'indices peuvent être fixes, déterminés par des tests, des essais ou des simulations et/ou être calculés préalablement à une utilisation de l'aéronef. Ce ou ces intervalles d'indices peuvent ainsi être stockés dans une mémoire pour être utilisés en vol lors d'une utilisation de l'aéronef. Une telle mémoire peut avantageusement être embarquée dans l'aéronef.

Par ailleurs, les au moins deux paramètres de fonctionnement de l'aéronef peuvent être choisis parmi un groupe comportant une vitesse de rotation d'un générateur de gaz (N1) d'un moteur de l'aéronef, un premier couple (TQ1) lié au fonctionnement du moteur, un second couple (TQ2) lié au fonctionnement d'une boîte principale de transmission de puissance, une température (T4) des gaz du moteur, et une vitesse de rotation (NR) d'un rotor équipant l'aéronef.

En effet, de tels paramètres de fonctionnement de l'aéronef permettent ainsi de surveiller les composants les plus critiques et nécessaires pour le pilotage d'un aéronef.

Selon un exemple avantageux, le procédé peut comporter une mesure d'une vitesse de déplacement de l'aéronef par rapport à l'air, au moins un intervalle des au moins deux intervalles d'indices étant variable en fonction de la mesure de la vitesse de déplacement pour au moins un desdits au moins deux paramètres.

Par exemple, lorsque la mesure de la vitesse de déplacement est inférieure à une valeur de seuil prédéterminée un intervalle d'indices peut être borné par un premier couple de bornes et lorsque la mesure de la vitesse de déplacement est supérieure ou égale à cette valeur de seuil prédéterminée cet intervalle d'indices peut être borné par un second couple de bornes. Ainsi, l'une au moins des deux bornes du premier couple peut être distincte des bornes du second couple. Eventuellement, les deux bornes du premier couple peuvent être distinctes des deux bornes du second couple.

Avantageusement, le procédé peut comporter une alerte déclenchée lorsque l'intervalle courant change parmi les au moins deux intervalles d'indices.

Une telle alerte peut être générée par un alerteur générant un signal sonore, visuel ou vibratoire. Par exemple, une lumière ou une diode peut être éclairée ou clignoter pour alerter le pilote que l'intervalle courant a changé. Un message écrit peut également être affiché sur l'afficheur permettant d'afficher les données numériques.

Une sirène ou tout signal sonore peut être émis par un buzzer ou par un haut parleur.

La présente invention a aussi pour objet un système d'aide au pilotage d'un aéronef, le système comportant au moins deux capteurs mesurant au moins deux valeurs courantes respectivement d'au moins deux paramètres de fonctionnement de l'aéronef.

Selon l'invention, ce système est remarquable en ce qu'il comporte :
- un calculateur générant, pour chacun des au moins deux paramètres de fonctionnement, une donnée numérique représentative d'une valeur courante d'un paramètre de fonctionnement,
- une unité d'identification configurée pour identifier, pour chacun des au moins deux paramètres de fonctionnement, un intervalle courant dans lequel un indice est compris, l'indice étant choisi parmi le groupe comportant la valeur courante, une vitesse de variation par rapport au temps de la valeur courante et une valeur courante corrigée en fonction de la vitesse de variation par rapport au temps de la valeur courante, l'intervalle courant étant identifié parmi au moins deux intervalles d'indices disjoints , chaque intervalle desdits au moins deux intervalles d'indices étant associé à une configuration d'affichage spécifique de ladite donnée numérique, deux configurations distinctes associés à deux intervalles différents étant différentes l'une de l'autre, lesdites configurations distinctes étant identiques respectivement pour chacun desdits au moins deux paramètres de fonctionnement, chaque configuration d'affichage spécifique correspondant à une combinaison d'au moins une couleur de ladite donnée numérique, une couleur de fond d'une zone d'affichage de ladite donnée numérique et une couleur d'un contour de ladite zone d'affichage et
- un afficheur affichant la donnée numérique dans au moins une page de symbologies selon la configuration d'affichage spécifique. En d'autres termes, un tel calculateur permet de calculer ou de fournir la donnée numérique représentative d'une valeur courante d'un paramètre de fonctionnement. Un tel calculateur peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, un tel calculateur peut être également relié à plusieurs capteurs par voies filaires ou non filaires. Ces capteurs peuvent permettre de mesurer les valeurs courantes d'au moins deux paramètres de fonctionnement de l'aéronef.

De tels capteurs peuvent ainsi être choisis parmi un groupe comportant les capteurs de vitesse de rotation du générateur de gaz d'un moteur équipant l'aéronef, les capteurs de couple lié au fonctionnement du moteur et/ou de la boîte de transmission de puissance principale et les capteurs de température des gaz du moteur.

Le calculateur peut ainsi générer la donnée numérique représentative d'une valeur courante d'un paramètre de fonctionnement, la donnée numérique peut prendre la forme de la valeur courante ou la forme d'une autre valeur par exemple en convertissant la valeur courante en une information représentative d'un pourcentage d'une valeur de référence nominale.

L'afficheur est quant à lui relié au calculateur et reçoit par voie filaire ou non filaire la donnée numérique correspondant à chaque paramètre. L'afficheur permet alors d'afficher cette donnée numérique dans au moins une page de symbologies. Un tel afficheur peut comporter un écran agencé dans le cockpit par exemple sur une planche de bord ou encore un dispositif d'affichage dit « tête haute » tel qu'une visière de casque ou des verres de lunettes.

L'unité d'identification reçoit quant à elle les différentes données numériques, puis permet d'identifier des intervalles courants dans lesquels sont inscrits ces données numériques ou leurs vitesses de variation formant un indice.

Une telle unité d'identification peut être disjointe ou confondue avec le calculateur précédemment décrit, voire également être intégrée à l'afficheur. Cette unité d'identification peut comprendre par exemple au moins un processeur et au moins une mémoire, au moins un circuit intégré, au moins un système programmable, au moins un circuit logique, ces exemples ne limitant pas la portée donnée à l'expression « unité d'identification ». Le terme processeur peut désigner aussi bien une unité centrale de traitement connue sous l'acronyme CPU, une unité graphique de traitement GPU, une unité digitale connue sous l'acronyme DSP, un microcontrôleur...

L'information correspondante à l'identification de l'intervalle courant de l'indice peut ensuite être transmise l'afficheur par voie filaire ou non filaire. L'afficheur peut alors adapter en temps réel l'affichage de chacune des données numériques en fonction de l'identification de l'intervalle courant.

Un tel afficheur peut comporter éventuellement un configurateur d'affichage disjoint ou confondu avec le calculateur et l'unité d'identification précédemment décrits. Ce configurateur d'affichage peut comprendre par exemple au moins un processeur et au moins une mémoire, au moins un circuit intégré, au moins un système programmable, au moins un circuit logique, ces exemples ne limitant pas la portée donnée à l'expression « configurateur d'affichage ». Le terme processeur peut désigner aussi bien une unité centrale de traitement connue sous l'acronyme CPU, une unité graphique de traitement GPU, une unité digitale connue sous l'acronyme DSP, un microcontrôleur...

En pratique, un tel système peut comporter un capteur de vitesse générant une mesure d'une vitesse de déplacement de l'aéronef par rapport à l'air, au moins un des au moins deux intervalles d'indices étant variable en fonction de la mesure de la vitesse de déplacement pour au moins un desdits au moins deux paramètres.

Autrement dit, une mesure d'une vitesse de déplacement est transmise par voie filaire ou non filaire à l'unité d'identification pour modifier au moins un des intervalles d'indices.

En outre, l'invention se rapporte également à un aéronef remarquable en ce qu'il comporte un système d'aide au pilotage précité.

Un tel aéronef est ainsi apte à réduire la charge de travail d'un pilote et présente un niveau de sûreté accru.

L'invention et ses avantages apparaîtront avec plus de détails dans le cadre de la description qui suit avec des exemples donnés à titre illustratif en référence aux figures annexées qui représentent :
la figure 1, un schéma d'un aéronef équipé d'un système d'aide au pilotage conforme à l'invention,
la figure 2, une vue de face d'un afficheur, conformément à l'invention,
la figure 3, un logigramme illustrant un premier exemple de procédé d'aide au pilotage conforme à l'invention,
la figure 4, un logigramme illustrant un deuxième exemple de procédé d'aide au pilotage conforme à l'invention,
la figure 5, un logigramme illustrant un troisième exemple de procédé d'aide au pilotage conforme à l'invention, et
la figure 6, un logigramme illustrant un quatrième exemple de procédé d'aide au pilotage conforme à l'invention.

Les éléments présents dans plusieurs figures distinctes sont affectés d'une seule et même référence.

Comme déjà évoqué, l'invention concerne un système d'aide au pilotage d'un aéronef, un aéronef associé et un procédé d'aide au pilotage.

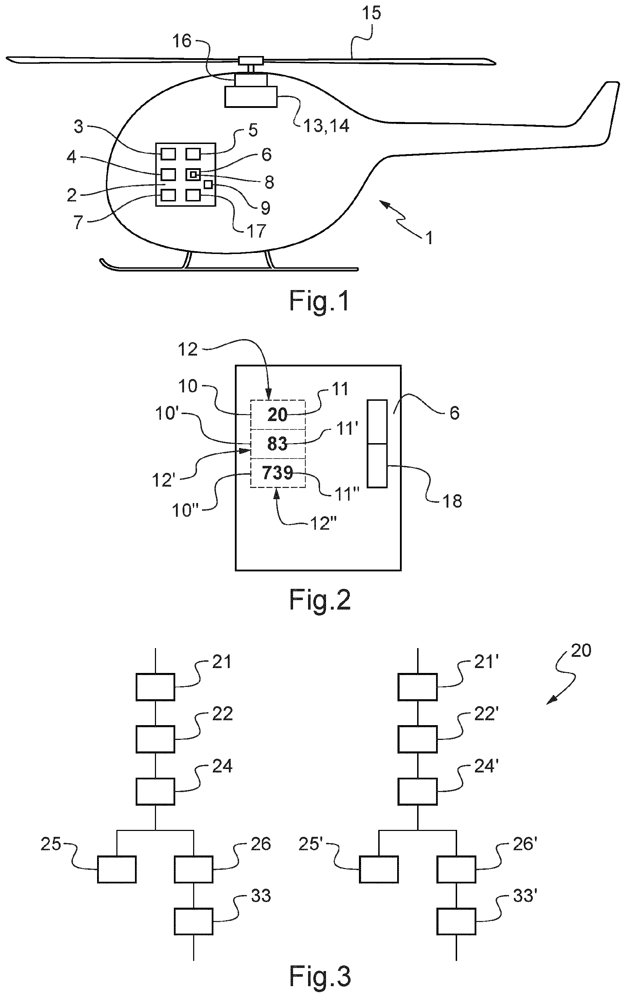

Tel que représenté à la figure 1, un tel aéronef 1 comporte au moins un moteur 13, 14, une boite BTP de transmission de puissance principale 16 permettant de transmettre un couple moteur généré par le ou les moteurs 13, 14 à un rotor 15 participant au moins à la sustentation de l'aéronef 1. En outre, l'aéronef 1 comporte également un système 2 d'aide au pilotage visant au moins à réduire la charge de travail d'un pilote lors d'une mission.

Ce système 2 comporte au moins deux capteurs 3, 4 mesurant les valeurs courantes d'au moins deux paramètres de fonctionnement de l'aéronef 1. Par exemple, ces au moins deux capteurs 3, 4 peuvent être choisis parmi des capteurs de couple lié au fonctionnement d'un moteur 13, 14 et/ou de la boîte BTP 16, des capteurs de température des gaz à du ou des moteurs 13, 14 et des capteurs de vitesse rotation du rotor 15.

Le système 2 comporte également un calculateur 5 générant, pour chacun des au moins deux paramètres de fonctionnement, une donnée numérique représentative d'une valeur courante d'un paramètre de fonctionnement.

Le calculateur 5 peut être relié à par exemple trois capteurs 3, 4 par voies filaires ou non filaires pour surveiller trois paramètres de fonctionnement. Bien entendu, plus de trois capteurs 3, 4 peuvent également être utilisés pour surveiller plus de trois paramètres de fonctionnement d'un aéronef 1.

Selon cet exemple, le calculateur 5 peut générer dans ce cas trois données numériques représentatives des trois valeurs courantes des paramètres de fonctionnement. Un tel calculateur 5 peut notamment convertir l'une au moins des valeurs courantes en une information représentative d'un pourcentage d'une valeur nominale de référence.

Le système 2 comporte alors un afficheur 6 affichant chaque donnée numérique dans au moins une page de symbologies. Un tel afficheur 6 est représenté plus en détail à la figure 2 et présente par exemple trois données numériques 11, 11', 11" représentatives des valeurs courantes de trois paramètres de fonctionnement.

L'afficheur 6 peut être connecté au calculateur 5 et reçoit par voie filaire ou non filaire les trois données numériques 11, 11', 11" correspondant aux trois paramètres. L'afficheur 6 permet alors d'afficher ces trois données numériques 11, 11', 11" dans au moins une page de symbologies.

Un tel afficheur 6 peut comporter un écran agencé dans le cockpit par exemple sur une planche de bord ou encore un dispositif d'affichage dit « tête haute » tel qu'une visière de casque ou des verres de lunettes.

Par ailleurs, le système 2 comporte aussi une unité d'identification 7 pour identifier un intervalle courant dans lequel un indice est compris. Un tel indice peut être formé soit directement par la valeur courante soit par une vitesse de variation par rapport au temps de cette valeur courante, une telle vitesse de variation étant par exemple déterminée à partir de plusieurs valeurs courantes mesurées sur une durée prédéterminée.

L'intervalle courant est alors identifié parmi au moins deux intervalles d'indices disjoints l'un de l'autre, ces au moins deux intervalles d'indices étant éventuellement consécutifs.

Lorsque deux intervalles d'indices sont consécutifs, ils ont alors une même borne qui est exclue d'un premier intervalle et incluse dans l'autre intervalle.

L'unité d'identification 7 peut être confondue ou distincte du calculateur 5. L'unité d'identification 7 peut ainsi être reliée par voie filaire ou non filaire avec le calculateur 5.

Par exemple, un premier intervalle d'indices peut être formé par toutes les valeurs inférieures à une valeur de seuil et un second intervalle d'indices peut être formé par toutes les valeurs supérieures ou égales à cette même valeur de seuil.

En outre, ces au moins deux intervalles d'indices sont avantageusement prédéterminés par des tests, des essais, des simulations ou des calculs préalablement à la mission de l'aéronef 1. Ces au moins deux intervalles d'indices sont alors stockés dans une mémoire qui peut être par exemple embarquée dans l'aéronef 1. Ces au moins deux intervalles d'indices peuvent également être calculés en vol éventuellement en fonction de mesures de paramètres physico-chimiques liés par exemple au milieu environnant dans lequel l'aéronef 1 évolue.

Tel que représenté, l'afficheur 6 peut comporter également un configurateur d'affichage 8 permettant de modifier l'affichage de chacune des données numériques 11 ,11', 11". Le configurateur d'affichage 8 peut ainsi être relié par voie filaire ou non filaire avec l'unité d'identification 7.

Alternativement, ce configurateur d'affichage 8 peut être confondu ou disjoint du calculateur 5 et de l'unité d'identification 7. Le configurateur d'affichage 8 peut ainsi être relié par voie filaire ou non filaire avec d'une part l'unité d'identification 7 et d'autre part le calculateur 5.

Un tel configurateur d'affichage 8 peut ainsi afficher la donnée numérique 11, 11', 11" selon au moins deux configurations d'affichage correspondant respectivement à au moins deux intervalles d'indices. Chaque configuration d'affichage correspond à une combinaison d'au moins une couleur de la donnée numérique 11, 11', 11", d'une couleur de fond d'une zone d'affichage 10, 10', 10" pour la donnée numérique 11, 11', 11" et d'une couleur d'un contour 12, 12', 12" de la zone d'affichage 10, 10, 10", chaque combinaison étant alors différente des autres combinaisons.

De telles au moins deux configurations d'affichage comportent ainsi une première configuration d'affichage prédéterminée lorsque l'intervalle courant est un premier intervalle, et une deuxième configuration d'affichage prédéterminée lorsque l'intervalle courant est un deuxième intervalle et ainsi de suite, chaque configuration d'affichage prédéterminée étant distincte de la ou des autres configurations d'affichage prédéterminées.

Par exemple, dans une première configuration d'affichage, la donnée numérique 11, 11', 11" peut être de couleur blanche sur un fond noir et entourée d'un contour 12, 12', 12" noir qui est alors confondu avec le fond d'une zone d'affichage 10, 10', 10".

Dans une deuxième configuration d'affichage, la donnée numérique 11, 11', 11" peut quant à elle être de couleur blanche sur un fond noir et entourée d'un contour 12, 12', 12" blanc qui tranche avec le fond noir d'une zone d'affichage 10, 10', 10".

Cette deuxième configuration d'affichage de la donnée numérique 11, 11', 11" permet ainsi très simplement d'informer le pilote que l'intervalle courant a changé et est le deuxième intervalle.

En pratique, le système 2 peut comporter un capteur de vitesse 9 générant une mesure d'une vitesse de déplacement de l'aéronef 1 par rapport à l'air, l'un au moins des au moins deux intervalles d'indices étant variable en fonction de la mesure de la vitesse de déplacement issue de ce capteur de vitesse 9.

Par exemple, les différentes bornes d'un tel intervalle d'indices variable peuvent être prédéterminées et mémorisées dans une mémoire sous la forme une table ou un tableau présentant au moins deux lignes et au moins deux colonnes. Chaque colonne du tableau correspond à une plage de vitesses prédéterminée et chaque ligne comporte les bornes d'un intervalle d'indices prédéterminé associé à la plage de vitesses.

Le capteur de vitesse 9 transmet alors par voie filaire ou non filaire la mesure de la vitesse de déplacement à l'unité d'identification 7. Cette unité d'identification 7 peut alors modifier une ou des bornes de l'un des intervalles d'indices en fonction de cette mesure de la vitesse.

Le système 2 peut également comprendre un alerteur 17 apte à générer au moins une alerte. Une telle alerte peut prendre la forme d'une alarme visuelle, par exemple par le biais de l'émission d'une lumière avec une diode électroluminescente ou un équivalent ou de l'affichage sur un écran d'un ou de plusieurs caractères, d'une alarme sonore, par le biais d'un haut-parleur, et/ou d'une alarme haptique, par exemple à l'aide d'une unité vibrante faisant vibrer un organe tenu ou porté par le pilote de l'aéronef 1.

Les figures 3 à 6 représentent quant à elles différents exemples de procédés dans lesquels, à des fins de simplification et pour une meilleure lisibilité, ces procédés seront représentés pour permettre la surveillance de seulement deux paramètres de fonctionnement distincts.

Tel que représenté à la figure 3, l'invention se rapporte également à un procédé 20 d'aide au pilotage de l'aéronef 1.

Ce procédé 20 comporte ainsi au moins deux étapes de mesure 21, 21' des valeurs courantes d'au moins deux paramètres de fonctionnement distincts tels que décrits précédemment. Ces étapes de mesure 21 et 21' sont ainsi opérées en vol lors d'une mission de l'aéronef 1 pour aider le pilote à surveiller la sûreté de ses manœuvres de pilotage.

Dés lors, le procédé 20 comporte, pour chacun des paramètres de fonctionnement surveillés, une génération 22, 22' d'une donnée numérique 11, 11' représentative de la valeur courante du paramètre de fonctionnement. Chaque capteur 3, 4 met alors en œuvre une étape de mesure 21 et 21' et transmet la valeur courante du paramètre au calculateur 5 pour effectuer la génération 22, 22' d'une donnée numérique 11, 11'.

Le procédé 20 comporte alors une identification 24, 24' de l'intervalle courant, avec l'unité d'identification 7. Un tel intervalle courant est alors l'intervalle dans lequel la valeur courante ou la vitesse de variation par rapport au temps de la valeur courante est comprise, l'intervalle courant étant identifié parmi au moins deux intervalles d'indices.

Dés lors, tant que l'intervalle courant est un premier intervalle, le procédé 20 comporte un affichage 25, 25' dans au moins une page de symbologies de la donnée numérique 11, 11' selon la première configuration d'affichage prédéterminée.

Cependant, lorsque l'intervalle courant est identifié comme étant un deuxième intervalle, le procédé 20 comporte un affichage 26, 26' de la donnée numérique 11, 11' selon la deuxième configuration d'affichage prédéterminée.

En outre, le procédé 20 peut comporter une alerte 33, 33' déclenchée lorsque l'intervalle courant passe du premier intervalle au deuxième intervalle. Une telle alerte 33, 33' peut être mise en œuvre par l'alerteur 17 du système 2 ou encore par tout autre alerteur indépendant.

Par ailleurs, l'intervalle courant peut également être identifié par exemple parmi quatre intervalles d'indices comportant un premier intervalle d'indices, un deuxième intervalle d'indices, un troisième intervalle d'indices et un quatrième intervalle d'indices , ces premier, deuxième, troisième et quatrième intervalles étant disjoints les uns des autres.

Tel que représenté à la figure 4, le procédé 30 peut ainsi comporter, lorsque l'intervalle courant est le troisième intervalle, un affichage 27, 27' de la donnée numérique 11, 11' selon une troisième configuration d'affichage prédéterminée, lorsque l'intervalle courant est le quatrième intervalle, un affichage 28, 28' de la donnée numérique 11, 11' selon une quatrième configuration d'affichage prédéterminée et, éventuellement lorsque l'intervalle courant est un cinquième intervalle, un affichage 29, 29' de la donnée numérique 11, 11' selon une cinquième configuration d'affichage prédéterminée.

Par ailleurs, les première, deuxième, troisième, quatrième et cinquième configurations d'affichage prédéterminées sont alors distinctes les unes des autres et correspondent également à des combinaisons distinctes d'au moins la couleur de la donnée numérique 11, 11', la couleur de fond de la zone d'affichage 10, 10' et la couleur du contour 12, 12' de la zone d'affichage 10, 10'.

L'utilisation de quatre ou cinq configurations d'affichage distinctes les unes des autres permet ainsi de définir plusieurs alertes correspondant à plusieurs limites distinctes ou une alerte et plusieurs préalertes opérées en fonction de l'identification 24, 24' de l'intervalle courant.

Par exemple, l'affichage 27, 27' de la donnée numérique 11, 11' selon la troisième configuration d'affichage prédéterminée peut correspondre à une première préalerte correspondant à un premier niveau de risque de dépassement d'une limite. L'affichage 28, 28' de la donnée numérique 11, 11' selon la quatrième configuration d'affichage prédéterminée peut correspondre à une seconde préalerte correspondant à un second niveau de risque supérieur au premier niveau de risque ou encore à une alerte correspondant au dépassement de la limite.

Lorsqu'il est mis en œuvre, l'affichage 29, 29' de la donnée numérique 11, 11' selon la cinquième configuration d'affichage prédéterminée peut correspondre à une alerte correspondant au dépassement de la limite.

Alternativement, l'affichage 27, 27' de la donnée numérique 11, 11' selon la troisième configuration d'affichage prédéterminée peut correspondre à une préalerte correspondant au rapprochement de l'indice vers une première limite. L'affichage 28, 28' de la donnée numérique 11, 11' selon la quatrième configuration d'affichage prédéterminée peut correspondre à une première alerte correspondant au dépassement de cette première limite se rapportant à un premier régime moteur particulier par exemple. L'affichage 29, 29' de la donnée numérique 11, 11' selon la cinquième configuration d'affichage prédéterminée peut correspondre à une seconde alerte correspondant au dépassement d'une seconde limite se rapportant à un second régime moteur par exemple.

Les premier et second régimes moteur peuvent par exemple correspondre en un régime dit par commodité « PMC » acronyme de l'expression Puissance Maximale Continue et en un régime dit par commodité « PMD » acronyme de l'expression Puissance Maximale au décollage. Ainsi, la première limite peut se rapporter au régime PMC et peut être inférieure à la seconde limite se rapportant au régime PMD.

Tel que représenté à la figure 2, ces affichages 25, 26, 27, 28, 29, 25', 26', 27', 28', 29' de chaque donnée numérique 11, 11' s'effectuent par exemple en colonne dans la ou les pages de symbologies, au moins une première donnée numérique 11 étant agencée au dessus d'une deuxième donnée numérique 11'.

Cette page de symbologies est avantageusement une page dite « FND » liée à la navigation en vol de l'aéronef 1 et/ou une page dite « VMD » liée au fonctionnement de l'aéronef 1.

En outre, l'afficheur 6 peut afficher chaque donnée numérique 11, 11' dans la page dite « FND » liée à la navigation en vol de l'aéronef 1, éventuellement à proximité immédiate d'un instrument de première limitation 18.

Tel que représenté à la figure 5, lorsque l'aéronef 1 est muni d'au moins deux moteurs 13, 14, le procédé 40 peut comporter une identification 41 d'un mode de fonctionnement de l'aéronef 1 parmi au moins un mode dit « AEO » dans lequel tous les moteurs 13, 14 sont opérationnels, un mode dit « OEl » dans lequel l'un des moteurs 13, 14 est en panne et un mode dit « OEI training » dans lequel une panne de l'un des moteurs 13, 14 est simulée à des fins d'entraînement au pilotage.

Dés lors, en fonction de cette identification 41 du mode de fonctionnement de l'aéronef 1, l'un au moins des au moins deux intervalles d'indices peut être modifié, voire tous les intervalles d'indices, peuvent être modifiés.

Chaque intervalle d'indices correspondant aux différents modes de fonctionnement AEO, OEI ou OEI training de l'aéronef 1 peut être prédéterminé et stocké dans une mémoire. Par conséquent, l'étape d'identification 24, 24' de l'intervalle courant dans lequel un indice est compris peut avoir recours à cette mémoire et sélectionner, pour chaque mode de fonctionnement identifié les au moins deux intervalles d'indices permettant d'identifier l'intervalle courant.

Par exemple, les différents intervalles d'indices peuvent être prédéterminés et mémorisés dans une mémoire sous la forme une table ou un tableau présentant au moins deux lignes et au moins deux colonnes. Chaque colonne du tableau correspond à un mode de fonctionnement et chaque ligne correspond à un intervalle d'indices prédéterminé.

Par exemple dans ce cas, dans le mode AEO, au moins un des deux intervalles d'indices peut être défini de par un premier couple des bornes, dans ledit mode OEI, cet intervalle d'indices peut être défini par un deuxième couple de bornes et dans le mode OEI training, cet intervalle d'indices peut être défini par un troisième couple de bornes. Ainsi, un ou plusieurs des premier, deuxième et troisième couples de bornes est ou sont distinctes d'au moins un autre couple de bornes parmi les premier, deuxième et troisième couple de bornes.

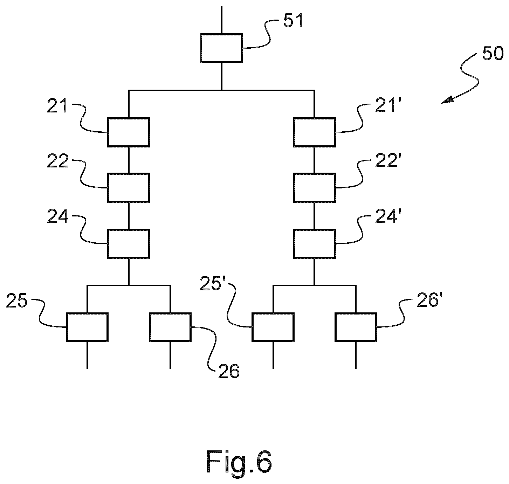

Par ailleurs, tel que décrit à la figure 6, le procédé 50 peut également comporter une mesure 51 d'une vitesse de déplacement de l'aéronef 1 par rapport à l'air opérée par exemple au moyen d'une ou plusieurs sondes de Pitot.

Dans ce cas, l'un au moins des au moins deux intervalles d'indices peut être modifié, voire tous les intervalles d'indices, peuvent être modifiée, en fonction de la mesure de la vitesse de déplacement de l'aéronef 1.

Chaque intervalle d'indices correspondant à une vitesse de déplacement de l'aéronef 1 peut être prédéterminé et stocké dans une mémoire. Par conséquent, l'étape d'identification 24, 24' de l'intervalle courant dans lequel un indice est compris peut avoir recours à cette mémoire et sélectionner, pour chaque mesure d'une vitesse de déplacement les au moins deux intervalles d'indices permettant d'identifier l'intervalle courant.

Le capteur de vitesse 9 précédemment décrit peut effectuer ainsi cette mesure 51 d'une vitesse de déplacement de l'aéronef 1.

Par exemple en dessous d'une vitesse de déplacement de 40 nœuds, un nœud étant égal à 1.852 kilomètre par heure, le premier intervalle d'indices peut être compris entre 0% et 85%, tandis qu'au dessus de 40 nœuds ce premier intervalle d'indices est compris entre 0% et 82%. Ce pourcentage peut en outre correspondre, à une valeur du couple lié au fonctionnement d'un moteur 13, 14 et/ou d'une boîte BTP de transmission de puissance principale 16 est exprimé en comparaison par rapport à une valeur nominale de référence correspondant un indice de 100%.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé (20, 30, 40, 50) d'aide au pilotage d'un aéronef (1), ledit procédé (20, 30, 40, 50) comportant lors d'une phase de vol dudit aéronef (1) au moins deux étapes de mesure (21, 21') d'au moins deux valeurs courantes respectivement d'au moins deux paramètres de fonctionnement dudit aéronef (1),
ledit procédé (20, 30, 40, 50) comportant, pour chacun desdits au moins deux paramètres de fonctionnement, les étapes suivantes :
• génération (22, 22') d'une donnée numérique (11, 11') représentative d'une valeur courante de ce paramètre de fonctionnement,
• identification (24, 24') d'un intervalle courant dans lequel un indice est compris, ledit indice étant choisi parmi le groupe comportant ladite valeur courante, une vitesse de variation par rapport au temps de ladite valeur courante et une valeur courante corrigée en fonction de ladite vitesse de variation par rapport au temps de ladite valeur courante, ledit intervalle courant étant identifié parmi au moins deux intervalles d'indices disjoints, chaque intervalle desdits au moins deux intervalles d'indices étant associé à une configuration d'affichage spécifique de ladite donnée numérique (11, 11'), deux configurations distinctes associés à deux intervalles différents étant différentes l'une de l'autre, lesdites configurations distinctes étant identiques respectivement pour chacun desdits au moins deux paramètres de fonctionnement, chaque configuration d'affichage spécifique correspondant à une combinaison d'au moins une couleur de ladite donnée numérique (11, 11'), une couleur de fond d'une zone d'affichage (10, 10') de ladite donnée numérique (11, 11') et une couleur d'un contour (12, 12') de ladite zone d'affichage (10, 10'), et
• affichage (25-29, 25'-29') de ladite donnée numérique (11, 11') dans au moins une page de symbologies selon ladite configuration d'affichage spécifique correspondant audit intervalle courant.

2. Procédé selon la revendication 1,
**caractérisé en ce que** lesdits au moins deux intervalles d'indices comportent un premier intervalle d'indices, un deuxième intervalle d'indices, un troisième intervalle d'indices et un quatrième intervalle d'indices, lesdits premier, deuxième, troisième et quatrième étant disjoints les uns des autres.

3. Procédé selon l'une quelconque des revendications 1 à 2, **caractérisé en ce que** ledit affichage (25-29, 25'-29') de chaque donnée numérique (11, 11') s'effectue en colonne dans ladite au moins une page de symbologies, au moins une donnée numérique (11) étant agencée au dessus d'une autre donnée numérique (11').

4. Procédé selon l'une quelconque des revendications 1 à 3, **caractérisé en ce que** ladite au moins une page de symbologies comporte une unique page choisie parmi un groupe comportant une page « dite FND » liée à la navigation en vol dudit aéronef (1) et une page « dite VMD » liée au fonctionnement dudit aéronef (1).

5. Procédé selon l'une quelconque des revendications 1 à 3, **caractérisé en ce que** ladite au moins une page de symbologies comporte une page « dite FND » liée à la navigation en vol dudit aéronef (1) et une page « dite VMD » liée au fonctionnement dudit aéronef (1).

6. Procédé selon l'une quelconque des revendications 1 à 5, **caractérisé en ce que**, ledit aéronef (1) comportant au moins deux moteurs (13, 14), ledit procédé (40) comporte une identification (41) d'un mode de fonctionnement dudit aéronef (1) parmi au moins un mode dit «AEO » dans lequel tous lesdits au moins deux moteurs (13, 14) sont opérationnels, un mode dit « OEI » dans lequel l'un desdits au moins deux moteurs (13, 14) est en panne et un mode dit «OEI training » dans lequel une panne de l'un desdits au moins deux moteurs (13, 14) est simulée à des fins d'entraînement au pilotage.

7. Procédé selon la revendication 6,
**caractérisé en ce que**, en fonction de ladite identification (41) dudit mode de fonctionnement dudit aéronef (1), l'un au moins desdits au moins deux intervalles d'indices est variable pour au moins un desdits au moins deux paramètres.

8. Procédé selon la revendication 7,
**caractérisé en ce que**, dans ledit mode « AEO », au moins un intervalle parmi lesdits au moins deux intervalles d'indices est défini par un premier couple de bornes, dans ledit mode « OEI », ledit au moins un intervalle est défini par un deuxième couple de bornes et dans ledit mode « OEI training », ledit au moins un intervalle est défini par un troisième couple de bornes, l'un au moins desdits premier, deuxième et troisième couples de bornes étant distinct d'au moins un autre couple de bornes parmi lesdits premier, deuxième et troisième couples de bornes.

9. Procédé selon l'une quelconque des revendications 1 à 8, **caractérisé en ce que** au moins un intervalle parmi lesdits au moins deux intervalles d'indices est prédéterminé pour au moins un desdits au moins deux paramètres.

10. Procédé selon l'une quelconque des revendications 1 à 9, **caractérisé en ce que** lesdits au moins deux paramètres de fonctionnement dudit aéronef (1) sont choisis parmi un groupe comportant une vitesse de rotation d'un générateur de gaz (N1) d'un moteur (13, 14) dudit aéronef (1), un premier couple (TQ1) lié au fonctionnement dudit moteur (13, 14), un second couple (TQ2) lié au fonctionnement d'une boîte principale de transmission de puissance, une température (T4) des gaz dudit moteur (13, 14) et une vitesse de rotation (NR) d'un rotor équipant ledit aéronef.

11. Procédé selon l'une quelconque des revendications 1 à 10, **caractérisé en ce que** ledit procédé (50) comporte une mesure (51) d'une vitesse de déplacement dudit aéronef (1) par rapport à l'air, au moins un intervalle desdits au moins deux intervalles d'indices étant variable en fonction de ladite mesure de ladite vitesse de déplacement.

12. Procédé selon l'une quelconque des revendications 1 à 11, **caractérisé en ce que** ledit procédé (20) comporte une alerte (33, 33') déclenchée lorsque ledit intervalle courant change parmi lesdits au moins deux intervalles d'indices.

13. Système (2) d'aide au pilotage d'un aéronef (1), ledit système (2) comportant au moins deux capteurs (3, 4) mesurant au moins deux valeurs courantes respectivement d'au moins deux paramètres de fonctionnement dudit aéronef (1), ledit système (2) comportant:
• un calculateur (5) générant, pour chacun desdits au moins deux paramètres de fonctionnement, une donnée numérique (11, 11') représentative d'une valeur courante d'un paramètre de fonctionnement,
• une unité d'identification (7) configurée pour identifier, pour chacun desdits au moins deux paramètres de fonctionnement, un intervalle courant dans lequel un indice est compris, ledit indice étant choisi parmi le groupe comportant ladite valeur courante, une vitesse de variation par rapport au temps de ladite valeur courante et une valeur courante corrigée en fonction de ladite vitesse de variation par rapport au temps de ladite valeur courante, ledit intervalle courant étant identifié parmi au moins deux intervalles d'indices disjoints, chaque intervalle desdits au moins deux intervalles d'indices étant associé à une configuration d'affichage spécifique de ladite donnée numérique (11, 11'), deux configurations distinctes associés à deux intervalles différents étant différentes l'une de l'autre, lesdites configurations distinctes étant identiques respectivement pour chacun desdits au moins deux paramètres de fonctionnement, chaque configuration d'affichage spécifique correspondant à une combinaison d'au moins une couleur de ladite donnée numérique (11, 11'), une couleur de fond d'une zone d'affichage (10, 10') de ladite donnée numérique (11, 11') et une couleur d'un contour (12, 12') de ladite zone d'affichage (10, 10') et,
• un afficheur (6) affichant ladite donnée numérique (11, 11') dans au moins une page de symbologies selon ladite configuration d'affichage spécifique.

14. Système d'aide au pilotage selon la revendication 13, **caractérisé en ce que** ledit système (2) comporte un capteur de vitesse (9) générant une mesure d'une vitesse de déplacement dudit aéronef (1) par rapport à l'air, l'un au moins desdits au moins deux intervalles d'indices étant variable en fonction de ladite mesure de ladite vitesse de déplacement.

15. Aéronef (1) **caractérisé en ce que** ledit aéronef (1) comporte un système (2) d'aide au pilotage selon l'une quelconque des revendications 13 à 14.

## Patentansprüche

1. Verfahren (20, 30, 40, 50) zur Unterstützung der Steuerung eines Luftfahrzeugs (1), wobei das Verfahren (20, 30, 40, 50) während einer Flugphase des Luftfahrzeugs (1) mindestens zwei Schritte des Messens (21, 21') von mindestens zwei aktuellen Werten von mindestens zwei Betriebsparametern des Luftfahrzeugs (1) umfasst, wobei das Verfahren (20, 30, 40, 50) für jeden der mindestens zwei Betriebsparameter die folgenden Schritte umfasst:
• Erzeugen (22, 22') eines digitalen Datenwerts (11, 11'), der einen aktuellen Wert dieses Betriebsparameters repräsentiert,
• Identifizieren (24, 24') eines aktuellen Intervalls, in dem ein Index enthalten ist, wobei der Index aus der Gruppe ausgewählt wird, die den aktuellen Wert, eine zeitliche Änderungsrate des aktuellen Werts und einen anhand der zeitlichen Änderungsrate des aktuellen Werts korrigierten aktuellen Wert umfasst, wobei das aktuelle Intervall unter mindestens zwei disjunkten Indexintervallen identifiziert wird, wobei jedes der mindestens zwei Indexintervalle einer spezifischen Anzeigekonfiguration des digitalen Datenwerts (11, 11') zugeordnet ist, wobei zwei verschiedene Konfigurationen, die zwei unterschiedlichen Intervallen zugeordnet sind, sich voneinander unterscheiden, wobei die verschiedenen Konfigurationen für jeden der mindestens zwei Betriebsparameter jeweils identisch sind, wobei jede spezifische Anzeigekonfiguration einer Kombination aus mindestens einer Farbe des digitalen Datenwerts (11, 11'), einer Hintergrundfarbe eines Anzeigebereichs (10, 10') des digitalen Datenwerts (11, 11') und einer Farbe eines Umrisses (12, 12') des Anzeigebereichs (10, 10') entspricht, und
• Anzeigen (25-29, 25'-29') des digitalen Datenwerts (11, 11') auf mindestens einer Symbologieseite gemäß der dem aktuellen Intervall entsprechenden spezifischen Anzeigekonfiguration.

2. Verfahren nach Anspruch 1,
**dadurch gekennzeichnet, dass** die mindestens zwei Indexintervalle ein erstes Indexintervall, ein zweites Indexintervall, ein drittes Indexintervall und ein viertes Indexintervall umfassen, wobei das erste, zweite, dritte und vierte Indexintervall zueinander disjunkt sind.

3. Verfahren nach einem der Ansprüche 1 bis 2,
**dadurch gekennzeichnet, dass** das Anzeigen (25-29, 25'-29') jedes digitalen Datenwerts (11, 11') auf der mindestens einen Symbologieseite spaltenweise erfolgt, wobei mindestens ein digitaler Datenwert (11) über einem anderen digitalen Datenwert (11') angeordnet wird.

4. Verfahren nach einem der Ansprüche 1 bis 3,
**dadurch gekennzeichnet, dass** die mindestens eine Symbologieseite eine einzige Seite umfasst, die aus einer Gruppe ausgewählt ist, die eine Seite "FND", die mit der Flugnavigation des Luftfahrzeugs (1) in Verbindung steht, und eine Seite "VMD", die mit dem Betrieb des Luftfahrzeugs (1) in Verbindung steht, umfasst.

5. Verfahren nach einem der Ansprüche 1 bis 3,
**dadurch gekennzeichnet, dass** die mindestens eine Symbologieseite eine Seite "FND", die mit der Flugnavigation des Luftfahrzeugs (1) in Verbindung steht, und eine Seite "VMD", die mit dem Betrieb des Luftfahrzeugs (1) in Verbindung steht, umfasst.

6. Verfahren nach einem der Ansprüche 1 bis 5,
**dadurch gekennzeichnet, dass** das Luftfahrzeug (1) mindestens zwei Triebwerke (13, 14) umfasst und das Verfahren (40) eine Identifizierung (41) eines Betriebsmodus des Luftfahrzeugs (1) unter mindestens einem sogenannten "AEO"-Modus, in dem alle mindestens zwei Triebwerke (13, 14) betriebsbereit sind, einem sogenannten "OEI"-Modus, in dem einer der mindestens zwei Motoren (13, 14) ausgefallen ist, und einem sogenannten "OEI-Training"-Modus umfasst, in dem ein Ausfall eines der mindestens zwei Motoren (13, 14) zu Flugtrainingszwecken simuliert wird, umfasst.

7. Verfahren nach Anspruch 6,
**dadurch gekennzeichnet, dass** in Abhängigkeit von der Identifizierung (41) des Betriebsmodus des Luftfahrzeugs (1) mindestens eines der mindestens zwei Indexintervalle für mindestens einen der mindestens zwei Parameter variabel ist.

8. Verfahren nach Anspruch 7,
**dadurch gekennzeichnet, dass** in dem "AEO"-Modus mindestens ein Intervall der mindestens zwei Indexintervalle durch ein erstes Paar von Grenzwerten definiert ist, in dem "OEI"-Modus das mindestens eine Intervall durch ein zweites Paar von Grenzwerten definiert ist und im "OEI-Training"-Modus das mindestens eine Intervall durch ein drittes Paar von Grenzwerten definiert ist, wobei mindestens eines der ersten, zweiten und dritten Paare von Grenzwerten sich von mindestens einem anderen Paar von Grenzwerten unter den ersten, zweiten und dritten Paaren von Grenzwerten unterscheidet.

9. Verfahren nach einem der Ansprüche 1 bis 8,
**dadurch gekennzeichnet, dass** mindestens ein Intervall der mindestens zwei Indexintervalle für mindestens einen der mindestens zwei Parameter vorgegeben ist.

10. Verfahren nach einem der Ansprüche 1 bis 9,
**dadurch gekennzeichnet, dass** die mindestens zwei Betriebsparameter des Luftfahrzeugs (1) aus einer Gruppe ausgewählt sind, die eine Drehzahl eines Gasgenerators (N1) eines Triebwerks (13, 14) des Luftfahrzeugs (1), ein mit dem Betrieb des Motors (13, 14) verknüpftes erstes Drehmoment (TQ1), ein mit dem Betrieb eines Hauptgetriebes verknüpftes zweites Drehmoment (TQ2), eine Temperatur (T4) der Gase des Motors (13, 14) und eine Drehzahl (NR) eines Rotors, mit dem das Luftfahrzeug ausgestattet ist, umfasst.

11. Verfahren nach einem der Ansprüche 1 bis 10,
**dadurch gekennzeichnet, dass** das Verfahren (50) eine Messung (51) einer Bewegungsgeschwindigkeit des Luftfahrzeugs (1) relativ zur Luft umfasst, wobei mindestens ein Intervall der mindestens zwei Indexintervalle in Abhängigkeit von der Messung der Bewegungsgeschwindigkeit variabel ist.

12. Verfahren nach einem der Ansprüche 1 bis 11,
**dadurch gekennzeichnet, dass** das Verfahren (20) eine Warnung (33, 33') umfasst, die ausgelöst wird, wenn sich das aktuelle Intervall unter den mindestens zwei Indexintervallen ändert.

13. System (2) zur Unterstützung der Steuerung eines Luftfahrzeugs (1), wobei das System (2) mindestens zwei Sensoren (3, 4) umfasst, die mindestens zwei aktuelle Werte von mindestens zwei Betriebsparametern des Luftfahrzeugs (1) messen, wobei das System (2) umfasst:
• einen Rechner (5), der für jeden der mindestens zwei Betriebsparameter einen digitalen Datenwert (11, 11') erzeugt, der einen aktuellen Wert eines Betriebsparameters darstellt,
• eine Identifizierungseinheit (7), die konfiguriert ist, um für jeden der mindestens zwei Betriebsparameter ein aktuelles Intervall zu identifizieren, in dem ein Index enthalten ist, wobei der Index aus der Gruppe ausgewählt ist, die den aktuellen Wert, eine zeitliche Änderungsrate des aktuellen Werts und einen anhand der zeitlichen Änderungsrate des aktuellen Werts korrigierten aktuellen Wert umfasst, wobei das aktuelle Intervall unter mindestens zwei disjunkten Indexintervallen identifiziert wird, wobei jedes der mindestens zwei Indexintervalle einer spezifischen Anzeigekonfiguration des digitalen Datenwerts (11, 11') zugeordnet ist, wobei zwei verschiedene Konfigurationen, die zwei unterschiedlichen Intervallen zugeordnet sind, sich voneinander unterscheiden, wobei die verschiedenen Konfigurationen für jeden der mindestens zwei Betriebsparameter jeweils identisch sind, wobei jede spezifische Anzeigekonfiguration einer Kombination aus mindestens einer Farbe des digitalen Datenwerts (11, 11'), einer Hintergrundfarbe eines Anzeigebereichs (10, 10') des digitalen Datenwerts (11, 11') und einer Farbe eines Umrisses (12, 12') des Anzeigebereichs (10, 10') entspricht, und
• eine Anzeige (6), die den digitalen Datenwert (11, 11') auf mindestens einer Symbologieseite gemäß der spezifischen Anzeigekonfiguration anzeigt.

14. System zur Unterstützung der Steuerung nach Anspruch 13,
**dadurch gekennzeichnet, dass** das System (2) einen Geschwindigkeitssensor (9) umfasst, der einen Messwert der Bewegungsgeschwindigkeit des Luftfahrzeugs (1) relativ zur Luft erzeugt, wobei mindestens eines der mindestens zwei Indexintervalle in Abhängigkeit von dem Messwert der Bewegungsgeschwindigkeit variabel ist.

15. Luftfahrzeug (1), **dadurch gekennzeichnet, dass** das Luftfahrzeug (1) ein System zur Unterstützung der Steuerung (2) nach einem der Ansprüche 13 bis 14 umfasst.

## Claims

1. Method (20, 30, 40, 50) for assisting with the piloting of an aircraft (1), said method (20, 30, 40, 50) having, during a flight phase of said aircraft (1), at least two steps (21, 21') of measuring at least two current values respectively of at least two operating parameters of said aircraft (1), said method (20, 30, 40, 50) having, for each of said at least two operating parameters, the following steps:
• generating (22, 22') a numerical datum (11, 11') representative of a current value of this operating parameter,
• identifying (24, 24') from a current interval in which an index is comprised, said index being chosen from among the group having said current value, a variation speed with respect to the time of said current value and a corrected current value according to said variation speed with respect to the time of said current value, said current interval being identified from among at least two disconnected index intervals, each interval of said at least two index intervals being associated with a specific display configuration of said numerical datum (11, 11'), two distinct configurations associated with two different intervals being different from one another, said distinct configurations being identical respectively for each of said at least two operating parameters, each specific display configuration corresponding to a combination of at least one colour of said numerical datum (11, 11'), a background colour of a display zone (10, 10') of said numerical datum (11, 11') and a colour of a contour (12, 12') of said display zone (10, 10'), and
• displaying (25-29, 25'-29') said numerical datum (11, 11') in at least one page of symbols according to said specific display configuration corresponding to said current interval.

2. Method according to claim 1,
**characterised in that** said at least two index intervals have a first index interval, a second index interval, a third index interval and a fourth index interval, said first, second, third and fourth being disconnected from one another.

3. Method according to any one of claims 1 to 2,
**characterised in that** said displaying (25-29, 25'-29') of each numerical datum (11, 11') is done in a column in said at least one page of symbols, at least one numerical datum (11) being arranged above another numerical datum (11').

4. Method according to any one of claims 1 to 3,
**characterised in that** said at least one page of symbols has one single page chosen from among a group having a so-called "FND" page linked to navigation in flight of said aircraft (1), and a so-called "VMD" page linked to the operation of said aircraft (1).

5. Method according to any one of claims 1 to 3,
**characterised in that** said at least one page of symbols has a so-called "FND" page linked to navigation in flight of said aircraft (1), and a so-called "VMD" page linked to the operation of said aircraft (1).

6. Method according to any one of claims 1 to 5,
**characterised in that**, said aircraft (1) having at least two engines (13, 14), said method (40) has an identification (41) of an operating mode of said aircraft (1) from among at least one so-called "AEO" mode, in which all said at least two engines (13, 14) are operational, a so-called "OEI" mode, in which one of said at least two engines (13, 14) is broken down and a so-called "OEI training" mode, in which a breakdown of one of said at least two engines (13, 14) is simulated for piloting training purposes.

7. Method according to claim 6,
**characterised in that**, according to said identification (41) of said operating mode of said aircraft (1), the at least one of said at least two index intervals is variable, for at least one of said at least two parameters.

8. Method according to claim 7,
**characterised in that**, in said "AEO" mode, at least one interval from among said at least two index intervals is defined by a first pair of terminals, in said "OEI" mode, said at least one interval is defined by a second pair of terminals and in said "OEI training" mode, said at least one interval is defined by a third pair of terminals, the at least one of said first, second and third pairs of terminals being distinct from at least one other pair of terminals from among said first, second and third pairs of terminals.

9. Method according to any one of claims 1 to 8,
**characterised in that** at least one interval from among said at least two index intervals is predetermined for at least one of said at least two parameters.

10. Method according to any one of claims 1 to 9,
**characterised in that** said at least two operating parameters of said aircraft (1) are chosen from among a group having a rotation speed of a gas generator (N1) of an engine (13, 14) of said aircraft (1), a first torque (TQ1) linked to the operation of said engine (13, 14), a second torque (TQ2) linked to the operation of a main power transmission box, a temperature (T4) of the gases of said engine (13, 14) and a rotation speed (NR) of a rotor equipping said aircraft.

11. Method according to any one of claims 1 to 10,
**characterised in that** said method (50) has a measurement (51) of a movement speed of said aircraft (1) with respect to the air, at least one interval of said at least two index intervals being variable according to said measurement of said movement speed.

12. Method according to any one of claims 1 to 11,
**characterised in that** said method (20) has an alert (33, 33') triggered when said current interval changes from among said at least two index intervals.

13. System (2) for assisting with the piloting of an aircraft (1), said system (2) having at least two sensors (3, 4) for measuring at least two current values respectively of at least two operating parameters of said aircraft (1), said system (2) having :
• a computer (5) generating, for each of said at least two operating parameters, a numerical datum (11, 11') representative of a current value of an operating parameter,
• an identification unit (7) configured to identify, for each of said at least two operating parameters, a current interval in which an index is comprised, said index being chosen from among the group having said current value, a variation speed with respect to the time of said current value and a corrected current value according to said variation speed with respect to the time of said current value, said current interval being identified from among at least two disconnected index intervals, each interval of said at least two index intervals being associated with a specific display configuration of said numerical datum (11, 11'), two distinct configurations associated with two different intervals being different from one another, said distinct configurations being identical respectively for each of said at least two operating parameters, each specific display configuration corresponding to a combination of at least one colour of said numerical datum (11, 11'), a background colour of a display zone (10, 10') of said numerical datum (11, 11') and a colour of a contour (12, 12') of said display zone (10, 10') and,
• a display unit (6) displaying said numerical datum (11, 11') in at least one page of symbols according to said specific display configuration.

14. System for assisting with piloting according to claim 13,
**characterised in that** said system (2) has a speed sensor (9) generating a measurement of a movement speed of said aircraft (1) with respect to the air, at least one interval of said at least two index intervals being variable according to said measurement of said movement speed.

15. Aircraft (1), **characterised in that** said aircraft (1) has a system (2) for assisting with piloting, according to any one of claims 13 to 14.
